# EUROPEAN PATENT APPLICATION

(11) **EP 4 843 650 A1**
(43) Date of publication of application: **25.11.2026**
(21) Application number: 25219146.5
(22) Date of filing: 27.11.2025
(51) Int. Cl.: B01D 36/04

(54) **DYNAMIC CENTRIFUGAL FILTER**

(30) Priority: 22.05.2025 CN 202510661789
(71) Applicant: Guangdong Huahui Intelligent Equipment Co., Ltd., Dongguan City, Guangdong Province (CN)
(72) Inventor: LIN, Shaopeng, Zhongtang Town, Dongguan City, Guangdong Province (CN); LIANG, Kai, Zhongtang Town, Dongguan City, Guangdong Province (CN); LI, Xinzan, Zhongtang Town, Dongguan City, Guangdong Province (CN); ZHAO, Shilong, Zhongtang Town, Dongguan City, Guangdong Province (CN)
(74) Representative: Tahtadjiev, Konstantin

(57) **Abstract**

A dynamic centrifugal filter, relating to the technical field of liquid filtration. The dynamic centrifugal filter includes a machine body (1) and a material drum (2) fixed on the machine body (1) and configured to filter out impurities in slurry, where a filter drum (3) and a grading wheel (4) are arranged in the material drum (2), the filter drum (3) is rotatably connected in the material drum (2), and the slurry flows into the filter drum (3) for filtration; and the grading wheel (4) is coaxially fixed on an outer side of the filter drum (3), and the grading wheel (4) is configured to drive the slurry in the material drum (2) to rotate, to form a centrifugal force to force the impurities to move away from the filter drum (3).

## Description

### TECHNICAL FIELD

The present disclosure relates to the technical field of liquid filtration, in particular to a dynamic centrifugal filter.

### BACKGROUND

Filtration equipment is widely used in industrial fields, typically employed to isolate impurities or larger unwanted particles. Commonly used liquid filters on the market, particularly those applied to battery electrode slurry filtration, include basket filters, bag filters, self-cleaning filters, and other filtration equipment.

For example, a patent document with application publication number CN117205653A, published on December 12, 2023, and titled *"Lithium Iron Phosphate Slurry Filtering Device"* includes a material drum and a filter drum mounted in the material drum. An upper cover is mounted on the material drum. A feeding hole is formed in the upper cover. A feeding sieve pipe is connected to the lower portion of the feeding hole. The feeding sieve pipe is mounted in the filter drum. A vibrator is also mounted on the upper cover. This patent employs the vibrator to drive the material drum, the filter drum, and the feeding sieve pipe to generate vibrations. As a result, a disguised filtration area is increased, clogging of a filter cake layer is avoided, permeability of the slurry is enhanced, and a situation where the slurry clogs sieve holes is reduced.

In practical applications, conventional bag filters, basket filters, and self-cleaning filters all employ stationary filter screens with gaps. Highly viscous liquids with a high solid content and fine particles will directly adhere to the surface of the filter screen or become lodged in its gaps (particularly for filtration of cathode materials used in lithium-ion batteries). Even a rotating scraper mounted on the surface of the filter screen or vibration induced by a vibrator cannot effectively prevent clogging of the filter screen.

### SUMMARY

An objective of the present disclosure is to provide a dynamic centrifugal filter, to solve the above defects in the prior art.

In order to achieve the above objective, the present disclosure provides the following technical solution:
A dynamic centrifugal filter includes a machine body and a material drum fixed on the machine body and configured to filter out impurities in slurry. The material drum is internally provided with:
a filter drum rotatably connected in the material drum, where the slurry flows into the filter drum for filtration; and
a grading wheel coaxially fixed on an outer side of the filter drum, where the grading wheel is configured to drive the slurry in the material drum to rotate, to form a centrifugal force to force the impurities to move away from the filter drum.

According to the dynamic centrifugal filter, a rotating shaft is rotatably connected to the material drum. The filter drum is coaxially fixed on the rotating shaft. A discharge channel is formed on the rotating shaft.

According to the dynamic centrifugal filter, the grading wheel is provided with several inclined grooves and flowing holes.

According to the dynamic centrifugal filter, a material blocking filter drum is coaxially and rotatably connected in the material drum. The material blocking filter drum is located on an outer side of the grading wheel. Flow guide ports are formed on the material blocking filter drum. Flow guide plates are rotatably connected in the flow guide ports.

According to the dynamic centrifugal filter, each flow guide plate has a first state of being close to the grading wheel to open the flow guide port, a second state of blocking the flow guide port, and a third state of abutting against an inner wall of the material drum to open the flow guide port.

According to the dynamic centrifugal filter, in a direction of rotation of the slurry, the impurities are capable of impinging on the flow guide plates in the first state and passing through the flow guide ports into a space between the material blocking filter drum and the material drum.

According to the dynamic centrifugal filter, when the flow guide plates are in the second state, the impurities are retained between the material blocking filter drum and the material drum.

According to the dynamic centrifugal filter, when the flow guide plates are in the third state, rotation of the material blocking filter drum against the direction of rotation of the slurry is capable of discharging the impurities from a space between the material blocking filter drum and the material drum.

According to the dynamic centrifugal filter, a drive disc is rotatably connected to the material blocking filter drum. Drive rods are hinged to the drive disc. The other ends of the drive rods are hinged to the flow guide plates.

According to the dynamic centrifugal filter, a first drive shaft is formed on the material blocking filter drum. The first drive shaft is rotatably connected to the material drum and extends out of the material drum, a second drive shaft is formed on the drive disc, and the second drive shaft is rotatably connected in the first drive shaft and extends out of the material drum.

In the above technical solution, according to the dynamic centrifugal filter provided in the present disclosure, the slurry flows from an outside of the filter drum to an inside of the filter drum in the material drum for filtration. In this process, the filter drum and the grading wheel rotate coaxially, such that the slurry in the material drum is driven to rotate through the grading wheel, and then the centrifugal force is formed to force the slurry and the impurities to move away from the filter drum. In this case, under action of feed pressure, the slurry passes through the filter drum and is discharged out of the material drum, such that a situation that the filter drum is blocked by the impurities and cannot perform filtration normally is effectively prevented.

### BRIEF DESCRIPTION OF THE DRAWINGS

In order to more clearly illustrate technical solutions in the examples of the present application or in the prior art, a brief introduction to the accompanying drawings required for the description of the examples will be provided below. Apparently, the accompanying drawings in the following description are merely some examples recorded in the present disclosure, and those of ordinary skill in the art would also be able to derive other accompanying drawings from these accompanying drawings.
FIG. 1 is a schematic diagram of an overall structure according to an example of the present disclosure.
FIG. 2 is a schematic structural diagram of a machine body according to another example of the present disclosure.
FIG. 3 is a schematic structural diagram of a grading wheel according to yet another example of the present disclosure.
FIG. 4 is a schematic structural diagram of a via hole according to yet another example of the present disclosure.
FIG. 5 is a schematic structural diagram of a first state of a flow guide plate according to yet another example of the present disclosure.
FIG. 6 is a schematic structural diagram of a second state of a flow guide plate according to yet another example of the present disclosure.
FIG. 7 is a schematic structural diagram of a third state of a flow guide plate according to yet another example of the present disclosure.
FIG. 8 is a schematic structural diagram of a second drive shaft according to yet another example of the present disclosure.
FIG. 9 is a schematic structural diagram of a planar portion according to yet another example of the present disclosure.
FIG. 10 is a schematic structural diagram of a friction wheel according to yet another example of the present disclosure.
FIG. 11 is a schematic structural diagram of a second locking block according to yet another example of the present disclosure.
FIG. 12 is a schematic structural diagram of an abutting bar according to still another example of the present disclosure.

### Description of reference numerals:

1. machine body; 2. material drum; 3. filter drum; 4. grading wheel; 5. inlet port; 6. rotating shaft; 7. via shaft hole; 8. via hole; 9. outlet port; 10. drive motor; 11. inclined groove; 12. flowing hole; 13. material blocking filter drum; 14. flow guide port; 15. flow guide plate; 16, arc groove; 17. drive disc; 18. drive rod; 19. first drive shaft; 20. second drive shaft; 21, planar portion; 22. slide rod; 23. drive plate; 24. extension portion; 25. friction bar; 26. friction wheel; 27. first locking block; 28. locking groove; 29. first spring; 30. second locking block; 31. second spring; 32. raised column; 33. abutting bar; 34. wedge surface; and 35. discharge port.

### DETAILED DESCRIPTION OF EMBODIMENTS

In order to enable those skilled in the art to better understand the technical solutions of the present disclosure, the present disclosure is described in further detail below in combination with accompanying drawings.

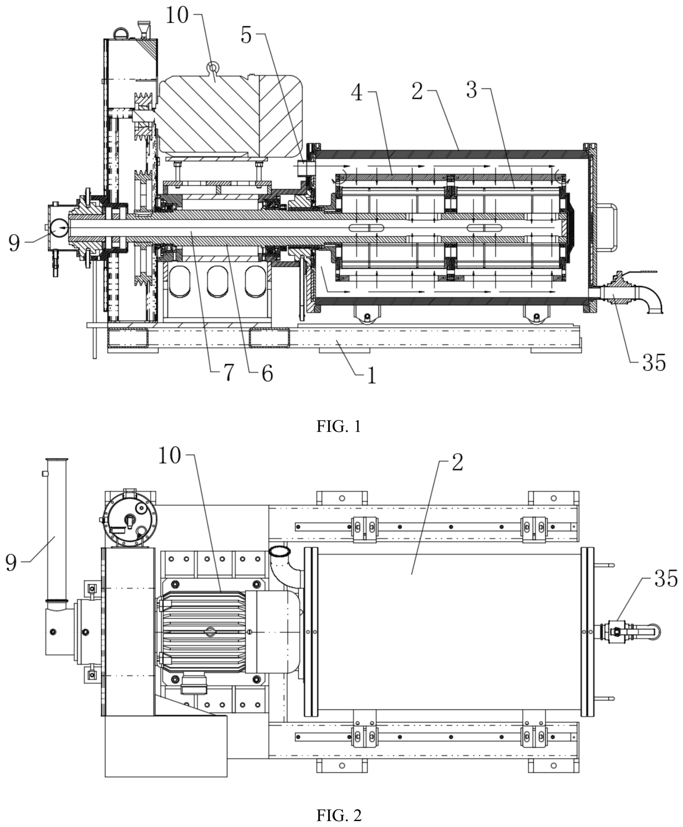

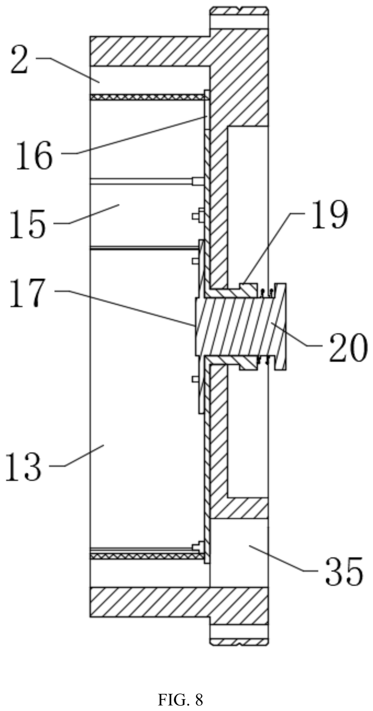

With reference to FIG. 1 to FIG. 12, an example of the present disclosure provides a dynamic centrifugal filter. The dynamic centrifugal filter includes a machine body 1 and a material drum 2 fixed on the machine body 1 and configured to filter out impurities in slurry. A filter drum 3 and a grading wheel 4 are arranged in the material drum 2. The filter drum 3 is rotatably connected in the material drum 2. The slurry flows into the filter drum 3 for filtration. The grading wheel 4 is coaxially fixed on an outer side of the filter drum 3. The grading wheel 4 is configured to drive the slurry in the material drum 2 to rotate, to form a centrifugal force to force the impurities to move away from the filter drum 3.

Specifically, the material drum 2 is horizontally arranged on the machine body 1. The material drum 2 and the machine body 1 may be mounted together by bolts or flanges. The material drum 2 is provided with an inlet port 5. Slurry to be filtered may be fed into the material drum 2 through the inlet port 5. A filtering structure is typically arranged in the material drum 2 to filter the slurry, such that impurities in the slurry are retained in the material drum 2. All the above are prior art, which is not repeated herein. Innovative points of the example of the present disclosure lie in that the filter drum 3 and the grading wheel 4 are arranged in the material drum 2. The material drum 2, the filter drum 3 and the grading wheel 4 are all coaxially arranged. The filter drum 3 is configured as a cylindrical structure and rotatably connected in the material drum 2. The grading wheel 4 is also configured as a cylindrical structure. An inner diameter of the grading wheel 4 is larger than an outer diameter of the filter drum 3. The grading wheel 4 and the filter drum 3 are coaxially fixed. In the example, the slurry flows from outside to inside at the material drum 2, such that the slurry is filtered through the filter drum 3 (an outlet pipe may be coaxially fixed on the material drum 2, and the outlet pipe extends into the filter drum, such that the filtered slurry can be discharged through the outlet pipe). During filtration, the grading wheel 4 and the filter drum 3 rotate synchronously, to drive the slurry in the material drum 2 to rotate, to form a centrifugal force to force the impurities in the slurry to move away from the filter drum 3. Subsequently, under action of feed pressure, the slurry continuously passes through the filter drum 3 and is discharged from the material drum 2, and the impurities move away from the filter drum 3 under action of the centrifugal force (equivalent to that the material drum 2 is filled with the slurry, and the impurities in the slurry are thrown onto an inner wall of the material drum 2 by the centrifugal force). Thus the impurities reach an outer wall of the filter drum 3 as little as possible, and clogging of the filter drum 3 is effectively avoided.

According to another example provided in the present disclosure, further, a rotating shaft 6 is rotatably connected to the material drum 2. The filter drum 3 is coaxially fixed on the rotating shaft 6. A discharge channel is formed on the rotating shaft 6. Specifically, the rotating shaft 6 is coaxially fixed on an inner side of the filter drum 3. The discharge channel includes a via shaft hole 7 formed along a central axis of the rotating shaft 6 and a via hole 8 formed on an outer wall of the rotating shaft 6 and being in communication with the via shaft hole 7. The via hole 8 is located inside the filter drum 3, such that the slurry can enter the filter drum 3 and be discharged through the via hole 8 and the via shaft hole 7. A housing is formed on the machine body 1. An outlet port 9 is formed on the housing. One end of the rotating shaft 6 extends out of the material drum 2 and is rotatably connected to the housing. Dynamic sealing structures are arranged between the rotating shaft 6 and the housing and between the rotating shaft 6 and the material drum 2, such that the slurry can be discharged through the outlet port 9 while sealing of the device is guaranteed.

Furthermore, the machine body 1 is provided with a drive motor 10. A transmission structure, such as a belt transmission structure or a gear transmission structure, is arranged between the drive motor 10 and the rotating shaft 6, to drive the rotating shaft 6 to rotate when the drive motor 10 operates. This is prior art, which is not repeated herein. The drive motor 10 and the transmission structure are arranged between the housing and the material drum 2, to avoid the transmission structure affecting sealing performance of the device as much as possible.

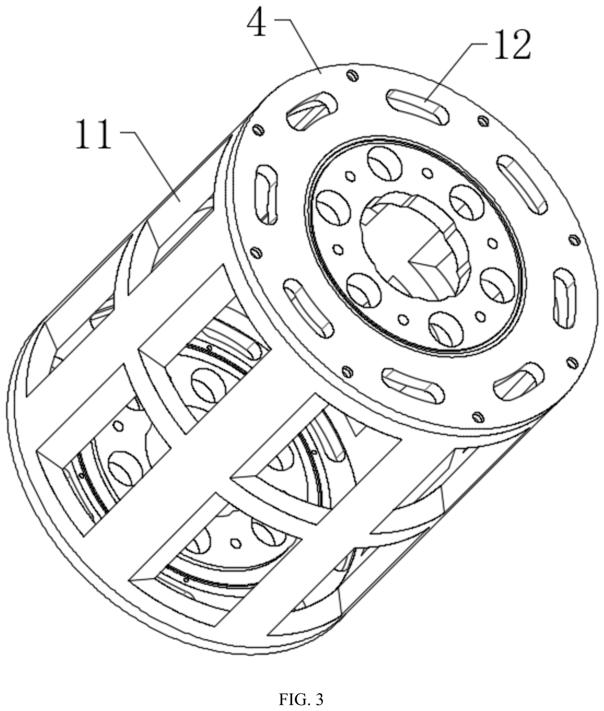

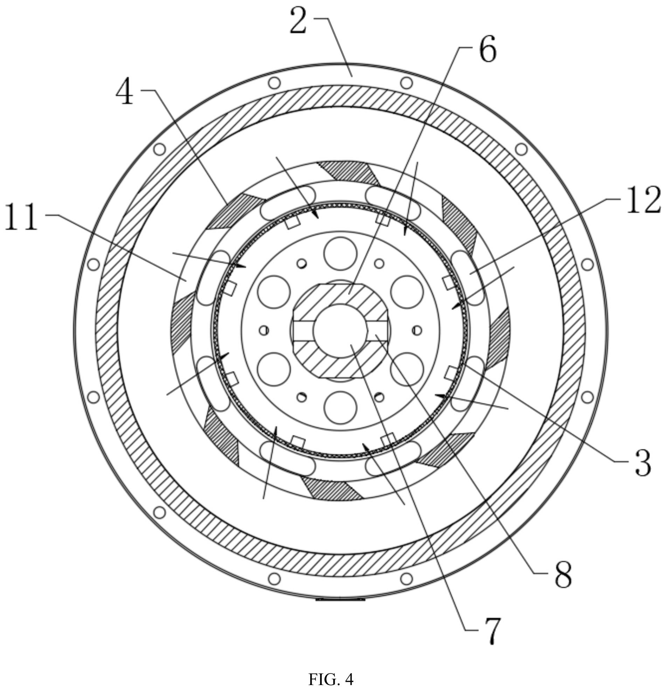

Preferably, the grading wheel 4 is provided with several inclined grooves 11 and flowing holes 12. Specifically, as shown in FIG. 3, the inclined grooves 11 are formed on a circumferential side wall of the grading wheel 4. The flowing hole 12 is formed on an end surface of the grading wheel 4. In this way, the slurry can approach the filter drum 3 through the inclined grooves 11. For the slurry that does not pass through the filter drum 3 in time, the slurry can flow out of the grading wheel 4 through the flowing hole 12, to form a circulating backflow between the filter drum 3 and the grading wheel 4. An opening direction of each inclined groove 11 forms a certain angle with a perpendicular line of an axis of the grading wheel 4, that is, the slurry passing through the inclined grooves 11 does not flow perpendicularly to the filter drum 3, but flows to the filter drum 3 at an angle with the filter drum 3 (as shown in FIG. 4, an arrow indicates a slurry flowing direction). In this way, during relative rotation of the slurry and the grading wheel 4, the slurry washes the filter drum 3 at an angle, such that the filter drum 3 can be further prevented from being clogged by the impurities.

In the above example, the impurities move away from the filter drum 3 and accumulate on the inner wall of the material drum 2 under the action of the centrifugal force. But some impurities may participate in circulation of the slurry from the inner wall of the material drum 2, which obviously causes more impurities to exist at the grading wheel 4 and the filter drum 3. According to yet another example provided in the present disclosure, further, a material blocking filter drum 13 is coaxially and rotatably connected in the material drum 2. The material blocking filter drum 13 is located on an outer side of the grading wheel 4. Flow guide ports 14 are formed on the material blocking filter drum 13. Flow guide plates 15 are rotatably connected in the flow guide ports 14. Specifically, the material blocking filter drum 13 is configured as a cylindrical structure and arranged coaxial with the material drum 2. One end of the material blocking filter drum 13 is configured to be opened. A small gap is maintained between the open end and the inner wall of the material drum 2, to avoid the impurities moving out from a space between the material blocking filter drum 13 and the material drum 2 as much as possible. The opening end of the material blocking filter drum 13 faces the inlet port 5, such that the slurry can be discharged between the material drum 2 and the grading wheel 4. The other end of the material blocking filter drum 13 is configure to be sealed and rotatably connected to the material drum 2. The sealed end is provided with a plurality of arc grooves 16. An end of the material drum 2 close to the sealed end of the material blocking filter drum 13 is provided with a discharge port 35. A space between the material blocking filter drum 13 and the material drum 2 and the plurality of arc grooves 16 can be in communication with the discharge port 35 (when the material blocking filter drum 13 rotates), to discharge the impurities out of the material drum 2 through the discharge port 35. The material blocking filter drum 13 is provided with the plurality of flow guide ports 14. The plurality of flow guide ports 14 are rotatably connected to the flow guide plates 15, to block or open the flow guide ports 14 through the plurality of flow guide plates 15. In the example, the filter drum 3, the material blocking filter drum 13 and the flow guide plates 15 all of filter structures with gaps. The material blocking filter drum 13 may be provided with a rotating structure to drive the plurality of flow guide plates 15 to rotate. The material drum 2 can alternatively be provided with a rotating structure to drive the material blocking filter drum 13 to rotate synchronously with the plurality of flow guide plates 15. The rotating structure may be a motor drive structure in the prior art. This is the prior art, which is not repeated herein. Preferably, each flow guide plate 15 has a first state of being close to the grading wheel 4 to open the flow guide port 14, a second state of blocking the flow guide port 14, and a third state of abutting against an inner wall of the material drum 2 to open the flow guide port 14.

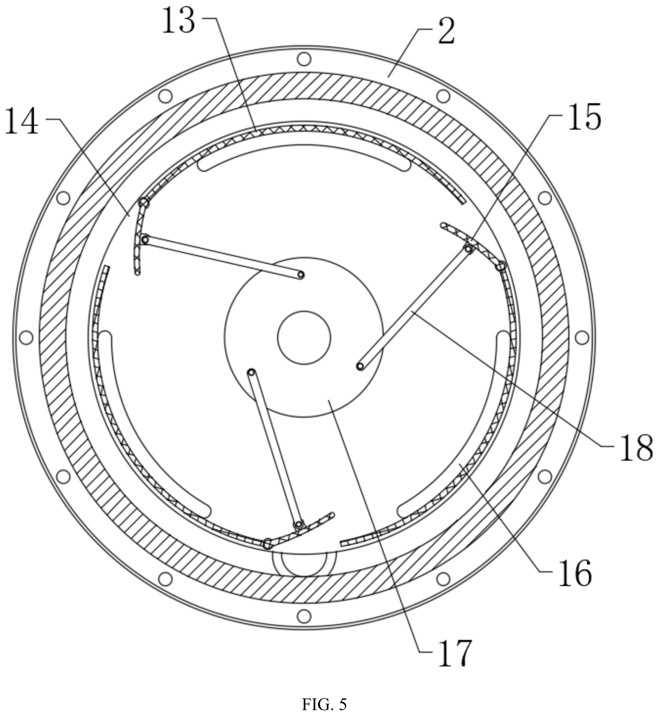

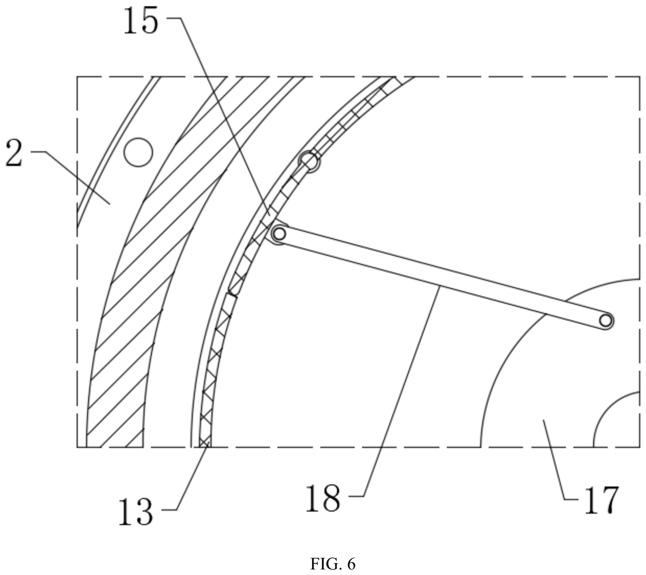

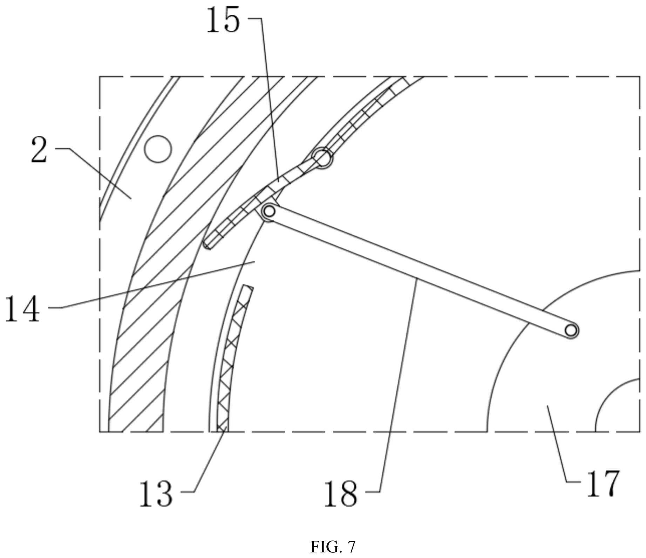

In this way, in a direction of rotation of the slurry, the impurities are capable of impinging on the flow guide plates 15 in the first state and passing through the flow guide ports 14 into a space between the material blocking filter drum 13 and the material drum 2. As shown in FIG. 5, the plurality of flow guide plates 15 are in the first state. In this case, the grading wheel 4 may drive the slurry to rotate clockwise, such that the slurry and the impurities can impinge on the flow guide plates 15. The impurities may enter between the material blocking filter drum 13 and the material drum 2 through guidance of the flow guide plates 15. The slurry may pass through the flow guide plates 15 and the material blocking filter drum 13 to rotate. Thus the impurities can be retained between the material blocking filter drum 13 and the material drum 2 without affecting flowing of the slurry. A situation that the impurities that have moved away from the filter drum 3 flow to the grading wheel 4 and the filter drum 3 again is avoided as much as possible. When the flow guide plates 15 are in the second state, the impurities are retained between the material blocking filter drum 13 and the material drum 2. As shown in FIG. 6, the flow guide plates 15 are in the second state. When the device stops, in a case where no material blocking filter drum 13 exists or no flow guide plate 15 on the material blocking filter drum 13 is in the first state or the third state, the impurities between the material blocking filter drum 13 and the material drum 2 are removed through the flow guide ports 14. This causes pollution to the grading wheel 4 and the filter drum 3 and influences next operation of the device. In the example, the flow guide plates 15 may be rotated to the second state to block the flow guide ports 14. The impurities are prevented from moving out from the space between the material blocking filter drum 13 and the material drum 2 as much as possible. When the flow guide plates 15 are in the third state, rotation of the material blocking filter drum 13 against the direction of rotation of the slurry is capable of discharging the impurities from the space between the material blocking filter drum 13 and the material drum 2 (In FIG. 5 to FIG. 7, during centrifugal filtration, the slurry rotates clockwise, and when the flow guide plates 15 are in the third state, the material blocking filter drum 13 rotates counterclockwise). As shown in FIG. 7, the flow guide plates 15 are in the third state. When the material drum 2 is cleaned, clean water or a cleaning agent may be introduced into the material drum 2 through the inlet port 5. Then the outlet port 9 is blocked, and the discharge port 35 is opened. Thus impurities and liquid after cleaning can be discharged through the discharge port 35. In the process, the flow guide plates 15 are maintained in the third state and rotates counterclockwise with the material blocking filter drum 13. In this way, the impurities between the material blocking filter drum 13 and the material drum 2 can be discharged (to the space between the material blocking filter drum 13 and the grading wheel 4) by rotation. Thus some impurities are discharged through the several arc grooves 16 and the discharge port 35. Some impurities that blocked between the material blocking filter drum 13 and the material drum 2 are discharged directly through the discharge port 35.

An advantage lies in that different working conditions can be adapted by switching the state of the flow guide plates 15. When the device performs centrifugal filtration, the flow guide plates 15 are switched to the first state, to guide the impurities to the space between the material blocking filter drum 13 and the material drum 2. When the device stops operating, the flow guide plates 15 are switched to the second state, to limit the impurities between the material blocking filter drum 13 and the material drum 2. When the material drum 2 is cleaned, the flow guide plates 15 are switched to the third state to drive the material blocking filter drum 13 to rotate against the direction of rotation of the slurry, to remove the impurities between the material blocking filter drum 13 and the material drum 2 and discharge the impurities through the arc grooves 16 and the discharge port 35. A situation that too many impurities accumulate between the material blocking filter drum 13 and the material drum 2 to influence discharge of the impurities is avoided as much as possible. Cleaning efficiency of the material drum 2 is improved as much as possible.

According to yet another example provided in the present disclosure, as an alternative to the above mentioned solution where the flow guide plates 15 and the material blocking filter drum 13 are driven to rotate by the rotating structure, further, a drive disc 17 is rotatably connected to the material blocking filter drum 13. A drive rod 18 is hinged to the drive disc 17. The other end of the drive rod 18 is hinged to the flow guide plate 15. A first drive shaft 19 is formed on the material blocking filter drum 13. The first drive shaft 19 is rotatably connected to the material drum 2 and extends out of the material drum 2. A second drive shaft 20 is formed on the drive disc 17. The second drive shaft 20 is rotatably connected in the first drive shaft 19 and extends out of the material drum 2. Specifically, the first drive shaft 19 and the second drive shaft 20 are coaxially arranged. The second drive shaft 20 is rotatably connected in the first drive shaft 19. The drive disc 17 is located on an inner wall of the sealed end of the material blocking filter drum 13. The drive disc 17 is fixed to the second drive shaft 20. The first drive shaft 19 and the second drive shaft 20 extend out of the material drum 2. Dynamic sealing structures are arranged between the first drive shaft 19 and the material drum 2 and between the first drive shaft 19 and the second drive shaft 20, to avoid leakage of the slurry from the material drum 2 as much as possible. A plurality of drive rods 18 are hinged to the drive disc 17. The plurality of drive rods 18 are respectively hinged to the plurality of flow guide plates 15. When the drive disc 17 is driven to rotate by the second drive shaft 20, the plurality of drive rods 18 may drive the plurality of flow guide plates 15 to rotate synchronously, to switch the states of the plurality of flow guide plates 15 synchronously. When the flow guide plates 15 are switched to the third state, the first drive shaft 19 and the second drive shaft 20 are driven to rotate synchronously, to rotate the material blocking filter drum 13 to clean the material drum 2. An advantage of the arrangement lies in that both the first drive shaft 19 and the second drive shaft 20 extend out of the material drum 2, such that two drive structures can be arranged on the outer wall of the material drum 2 to respectively drive the first drive shaft 19 and the second drive shaft 20 to rotate, which adapts to operation of the device.

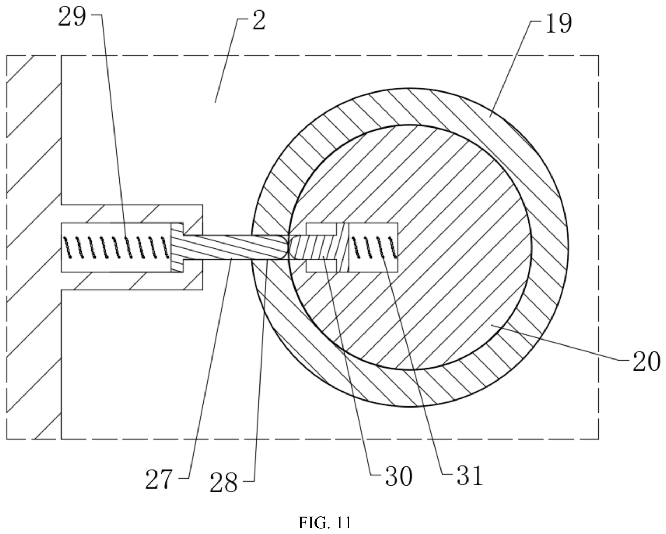

In yet another example of the present disclosure, as an alternative to the above solution where two drive structures are arranged on the material drum 2 to respectively drive the first drive shaft 19 and the second drive shaft 20 to rotate, further, a torsion spring is arranged between the first drive shaft 19 and the second drive shaft 20. The torsion spring is configured to force the first drive shaft 19 and the second drive shaft 20 to rotate relatively to make the flow guide plates 15 in the first state. The second drive shaft 20 is provided with a planar portion 21 (that is, a cut surface is formed on a disc structure). The outer wall of the material drum 2 is provided with a slide rod 22. The slide rod 22 is slidably connected to a drive plate 23. The drive plate 23 is provided with an extension portion 24. The drive plate 23 is also provided with a friction bar 25. An outer wall of the first drive shaft 19 is provided with a friction wheel 26 adapted to the friction bar 25. A first locking block 27 is slidably connected to the outer wall of the material drum 2. A locking groove 28 is formed on the first drive shaft 19. A first spring 29 is arranged on the outer wall of the material drum 2 to force the first locking block 27 to be inserted into the locking groove 28. Optionally, a first slide groove is formed on the outer wall of the material drum 2 for the first locking block 27 to slide. The first spring 29 is located in the first slide groove. Two ends of the first spring are fixed on the outer wall of the material drum 2 and the first locking block 27 respectively, to force the first locking block 27 to move close to the locking groove 28. A second locking block 30 is slidably connected in the second drive shaft 20. A second spring 31 is arranged in the second drive shaft 20 for forcing the second locking block 30 to move away from an axis of the second drive shaft 20. Optionally, a second slide groove is formed in the second drive shaft 20. The second locking block 30 is slidably connected in the second slide groove. The second spring 31 is arranged in the second slide groove. Two ends of the second spring 31 are fixed on an inner wall of the second slide groove and the second locking block 30 respectively, to force the second locking block 30 to move away from an axis of the second drive shaft 20 through the second spring 31. An elastic force of the first spring 29 is greater than that of the second spring 31. As shown in FIG. 11, the first locking block 27 is located in the locking groove 28. The second locking block 30 is aligned with the locking groove 28. In this case, the elastic force of the first spring 29 is greater, such that the first locking block 27 and the second locking block 30 can maintain a state shown in FIG. 11 and avoid influencing rotation of the second drive shaft 20 as much as possible. Until the first locking block 27 moves out of the locking groove 28, the second locking block 30 may enter the locking groove 28 under action of the second spring 31. The first locking block 27 is provided with a raised column 32. The drive plate 23 is provided with an abutting bar 33. One end of the abutting bar 33 is provided with a wedge surface 34.

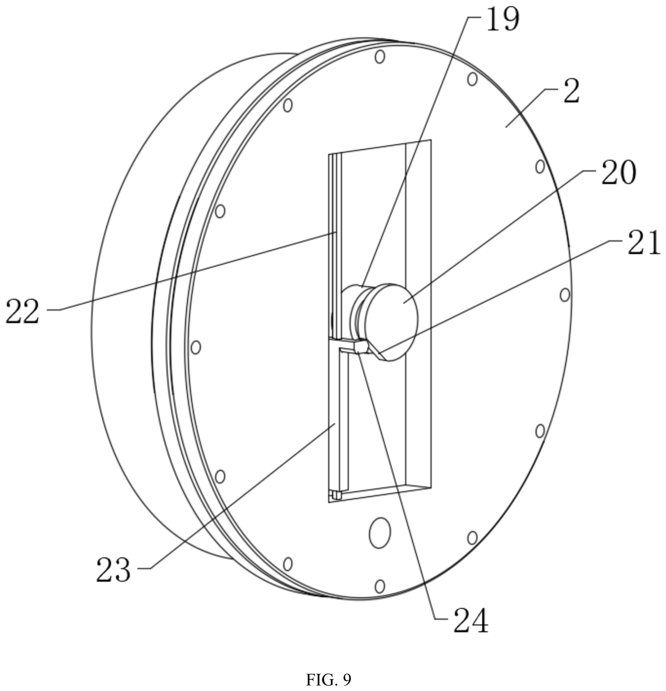

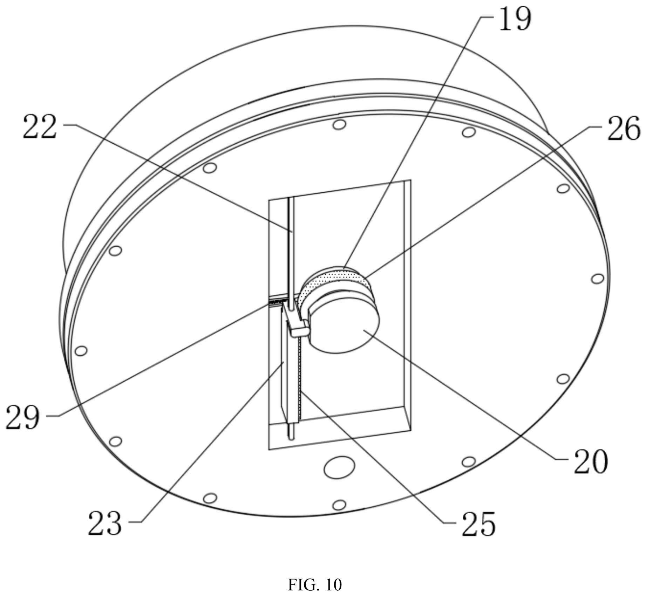

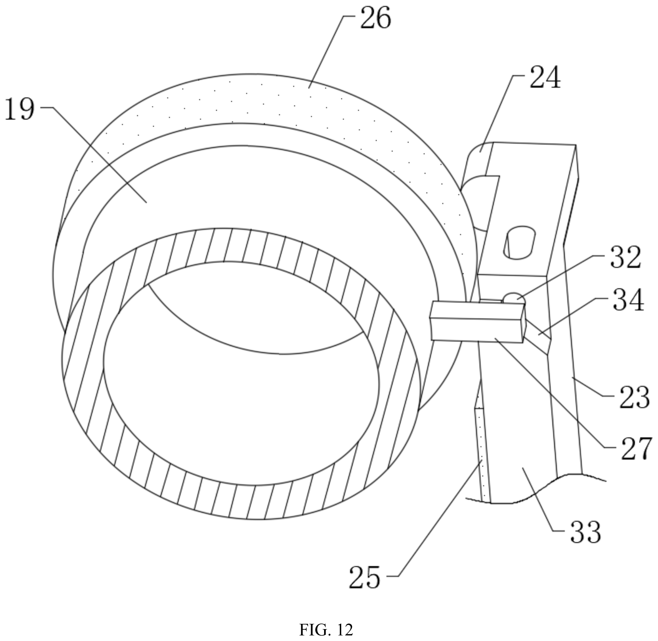

A linear drive mechanism may be arranged on the material drum 2 to drive the drive plate 23 to slide along the slide rod 22. The linear drive mechanism may be an air cylinder or an electric push rod structure in the prior art, which is prior art and not shown in the figures, and is not repeated herein. When the first locking block 27 corresponds to the locking groove 28, the first spring 29 forces the first locking block 27 to be inserted into the locking groove 28. In this case, relative positions of the material blocking filter drum 13 and the material drum 2 are locked, and the second drive shaft 20 is at an angle under the action of the torsion spring to drive the flow guide plates 15 to be in the first state. An initial state of the drive plate 23 is as shown in FIG. 9. In this case, the drive plate 23 is located at a bottom of the material drum 2. Subsequently, the linear drive mechanism may drive the drive plate 23 to rise along the slide rod 22. In the process, the extension portion 24 may abut against the planar portion 21 on the second drive shaft 20, to force the second drive shaft 20 to overcome the elastic force of the torsion spring and rotate. Thus the plurality of flow guide plates 15 are driven to switch from the first state to the second state and the third state sequentially (counterclockwise rotation in FIG. 5 to FIG. 7 corresponds to clockwise rotation in FIG. 9 to FIG. 11 and counterclockwise rotation in FIG. 12). When the plurality of flow guide plates 15 are switched to the third state, relative positions of the first drive shaft 19 and the second drive shaft 20 are as shown in FIG. 10 and FIG. 11. In this case, the extension portion 24 abuts against the planar portion 21 to make the planar portion in a vertical state (a state parallel to the slide rod 22). Then the extension portion 24 continues to rise without driving the second drive shaft 20 to rotate. The second drive shaft 20 is subjected to the force of the torsion spring to make the planar portion 21 abut against the extension portion 24. That is, after the extension portion 24 abuts against the planar portion 21 to make the planar portion in a vertical state, the drive plate 23 continues to rise without driving the first drive shaft 19 and the second drive shaft 20 to rotate. After the planar portion 21 rotates to the vertical state, the wedge surface 34 on the abutting bar 33 abuts against a raised portion. Since the elastic force of the first spring 29 is greater than that of the second spring 31, in FIG. 11, the first locking block 27 is kept in the locking groove 28, and the second locking block 30 cannot enter the locking groove 28. As the drive plate 23 rises, the raised portion and the first locking block 27 can be forced to move away from the first drive shaft 19 through the wedge surface 34, to force the first locking block 27 to move out of the locking groove 28. In this case, the second locking block 30 is inserted into the locking groove 28 under the action of the second spring 31, thus unlocking the relative positions of the material blocking filter drum 13 and the material drum 2 and locking the relative positions of the first drive shaft 19 and the second drive shaft 20. When the extension portion 24 and the planar portion 21 are separated (or are about to be separated), the friction wheel 26 and the friction bar 25 make contact and perform transmission, such that when the drive plate 23 continues to rise, the friction wheel 26 is driven to rotate through the friction bar 25. Then the first drive shaft 19 and the second drive shaft 20 are driven to rotate synchronously, and thus the flow guide plates 15 are in the third state and rotate with the material blocking filter drum 13. During synchronous rotation of the first drive shaft 19 and the second drive shaft 20, the raised portion abuts against a sidewall of the abutting bar 33 to force the first locking block 27 to move away from the first drive shaft 19.

An advantage of the arrangement lies in that a rising stroke of one drive plate 23 can drive the second drive shaft 20, the first locking block 27, the second locking block 30 and the first drive shaft 19 to operate successively. When the second drive shaft 20 is driven to operate, the first drive shaft 19 and the material drum 2 are in a locked state. When the first drive shaft 19 is driven to operate, the first drive shaft 19 and the second drive shaft 20 are in a locked state, such that the first drive shaft 19 and the second drive shaft 20 can rotate synchronously. In this way, driving the material blocking filter drum 13 and the flow guide plates 15 can be driven to operate based on operating conditions of the device.

It should be noted that when the drive plate 23 rises to drive the first drive shaft 19 and the second drive shaft 20 to rotate synchronously, the flow guide plates 15 are in the third state. The rotation of the material blocking filter drum 13 can drive the impurities between the material blocking filter drum 13 and the material drum 2 to move out and be discharged through the arc grooves 16 and the discharge port 35. Otherwise, when the drive plate 23 descends and resets, the first drive shaft 19 and the second drive shaft 20 can be driven to rotate reversely, thus driving some remaining impurities in the material drum 2 to move between the material blocking filter drum 13 and the material drum 2 again, which is convenient for centrifugal filtration next time.

Some illustrative examples of the present disclosure have been described above by way of illustration only, and it will no doubt occur to those skilled in the art that the described examples may be modified in various different ways without departing from the spirit and scope of the present disclosure. Accordingly, the foregoing drawings and description are illustrative in nature and should not be construed as limiting the scope of the claims of the present disclosure.

## Claims

1. A dynamic centrifugal filter, **characterized by** comprising a machine body (1) and a material drum (2) fixed on the machine body (1) and configured to filter out impurities in slurry, wherein the material drum (2) is internally provided with:
a filter drum (3) rotatably connected in the material drum (2), wherein the slurry flows into the filter drum (3) for filtration; and
a grading wheel (4) coaxially fixed on an outer side of the filter drum (3), wherein the grading wheel (4) is configured to drive the slurry in the material drum (2) to rotate, to form a centrifugal force to force the impurities to move away from the filter drum (3).

2. The dynamic centrifugal filter according to claim 1, **characterized in that** a rotating shaft (6) is rotatably connected to the material drum (2), the filter drum (3) is coaxially fixed on the rotating shaft (6), and a discharge channel is formed on the rotating shaft (6).

3. The dynamic centrifugal filter according to claim 2, **characterized in that** the grading wheel (4) is provided with several inclined grooves (11) and flowing holes (12).

4. The dynamic centrifugal filter according to claim 1, **characterized in that** a material blocking filter drum (13) is coaxially and rotatably connected in the material drum (2), the material blocking filter drum (13) is located on an outer side of the grading wheel (4), flow guide ports (14) are formed on the material blocking filter drum (13), and flow guide plates (15) are rotatably connected in the flow guide ports (14).

5. The dynamic centrifugal filter according to claim 4, **characterized in that** each flow guide plate (15) has a first state of being close to the grading wheel (4) to open the flow guide port (14), a second state of blocking the flow guide port (14), and a third state of abutting against an inner wall of the material drum (2) to open the flow guide port (14).

6. The dynamic centrifugal filter according to claim 5, **characterized in that** in a direction of rotation of the slurry, the impurities are capable of impinging on the flow guide plates (15) in the first state and passing through the flow guide ports (14) into a space between the material blocking filter drum (13) and the material drum (2).

7. The dynamic centrifugal filter according to claim 5, **characterized in that** when the flow guide plates (15) are in the second state, the impurities are retained between the material blocking filter drum (13) and the material drum (2).

8. The dynamic centrifugal filter according to claim 5, **characterized in that** when the flow guide plates (15) are in the third state, rotation of the material blocking filter drum (13) against the direction of rotation of the slurry is capable of discharging the impurities from a space between the material blocking filter drum (13) and the material drum (2).

9. The dynamic centrifugal filter according to claim 5, **characterized in that** a drive disc (17) is rotatably connected to the material blocking filter drum (13), drive rods (18) are hinged to the drive disc (17), and the other ends of the drive rods (18) are hinged to the flow guide plates (15).

10. The dynamic centrifugal filter according to claim 9, **characterized in that** a first drive shaft (19) is formed on the material blocking filter drum (13), the first drive shaft (19) is rotatably connected to the material drum (2) and extends out of the material drum (2), a second drive shaft (20) is formed on the drive disc (17), and the second drive shaft (20) is rotatably connected in the first drive shaft (19) and extends out of the material drum (2).
